# FASCICULE DE BREVET EUROPEEN

(11) **EP 0 502 966 B1**
(45) Date de publication et mention de la délivrance du brevet: **24.05.1995**
(21) Numéro de dépôt: 91900834.2
(22) Date de dépôt: 27.11.1990
(51) Int. Cl.: B60T 13/74, F16D 65/34

(54) **DISPOSITIF DE COMMANDE DU FREIN DE PARC POUR UN VEHICULE AUTOMOBILE**
STEUERVORRICHTUNG FÜR KRAFTFAHRZEUGFESTSTELLBREMSE
CONTROL DEVICE FOR MOTOR VEHICLE PARKING BRAKE

(30) Priorité: 27.11.1989 FR 8915548
(43) Date de publication de la demande: 16.09.1992
(73) Titulaire: ANDRUET, Jean-Claude, F-06860 Opio (FR)
(72) Inventeur: ANDRUET, Jean-Claude, F-06860 Opio (FR)
(74) Mandataire: Bonneau, Gérard
(86) Numéro de dépôt international: FR9000854
(87) Numéro de publication internationale: WO9108133

(56) Documents cités:
- EP-A- 0 220 092
- EP-A- 0 345 123
- DE-A- 3 238 196
- FR-A- 716 371
- US-A- 3 875 820

## Description

L'invention est relative à un dispositif de commande du frein de parc pour un véhicule automobile.

L'invention concerne plus particulièrement, mais non exclusivement, un tel dispositif de commande pour une voiture de golf, notamment du genre de celles visées par la demande de brevet FR 88 07243 (FR-A-2 631 902) déposée le 31 mai 1988 au nom du même demandeur.

FR-A-716 371 décrit un dispositif de commande de frein pour un véhicule automobile comprenant des moyens moteurs propres à actionner le frein, lesdits moyens moteurs étant constitués par un moteur électrique, et des moyens de commande pour la mise en marche, en particulier automatique, desdits moyens moteurs, lesdits moyens de commande comprenant une manivelle rotative propre à entraîner une liaison mécanique qui agit sur le frein.

L'invention a pour objet un perfectionnement d'un tel frein et a pour but, surtout, d'améliorer l'efficacité du frein de parc.

Selon l'invention, un dispositif de commande de frein pour un véhicule automobile, ce dispositif comprenant des moyens moteurs propres à actionner le frein, lesdits moyens moteurs étant constitués par un moteur électrique, et des moyens de commande pour la mise en marche, en particulier automatique, desdits moyens moteurs, lesdits moyens de commande comprenant une manivelle rotative propre à entraîner une liaison mécanique qui agit sur le frein, est caractérisé par le fait que la liaison mécanique agit sur un frein de parc, le moteur électrique étant propre à assurer la rotation de la manivelle d'une position "serrage" à une position "desserrage" dudit frein et inversement, et que le dispositif comprend un disque muni de deux pistes concentriques dont l'une au moins est ouverte et comporte un espace isolant séparant ses deux extrémités, ce disque étant calé sur l'arbre d'entraînement de la manivelle et étant propre à coopérer avec des frotteurs venant en contact avec ces pistes pour assurer l'alimentation électrique du moteur de manière à provoquer l'arrêt de l'arbre et de la manivelle dans une position déterminée et n'autoriser le mouvement de cette manivelle que pour passer de la position de serrage à celle de desserrage ou inversement.

De préférence, les positions de serrage et de desserrage de la manivelle sont diamétralement opposées ; la manivelle est calée sur l'arbre du moteur ou d'un réducteur entraîné par le moteur.

Avantageusement, le disque comporte une piste intérieure annulaire conductrice fermée sur elle-même, une autre piste extérieure ouverte concentrique à la piste, les deux pistes étant reliées électriquement entre elles, les deux extrémités voisines de la piste extérieure étant séparées par un espace annulaire, deux contacts diamétralement opposés étant prévus pour venir en appui sur la zone annulaire de la piste, l'un des contacts correspondant à la commande du serrage, l'autre contact étant affecté au desserrage.

De préférence, le disque comporte une piste conductrice extérieure ouverte et une seconde piste conductrice concentrique et prévue à l'intérieur de la piste extérieure, cette seconde piste étant également ouverte et comprenant entre ses extrémités un espace annulaire diamétralement opposé à l'espace de la piste extérieure, les contacts propres à appuyer sur les pistes ayant la même position angulaire et un contact double étant propre à appuyer simultanément sur la piste extérieure et la piste intérieure.

La commande du serrage et/ou du desserrage du frein de parc est manuelle, en particulier à l'aide de boutons-poussoirs ou de contacts propres à mettre en marche les moyens moteurs d'actionnement du frein de parc dans le sens du serrage ou du desserrage ; une commande automatique du desserrage est prévue lors d'une action sur la pédale d'accélérateur.

Selon un mode de réalisation avantageux, en particulier pour un véhicule de golf, les moyens moteurs du frein de parc sont propres à agir sur un dispositif de freinage normal, la liaison mécanique entre les moyens moteurs du frein de parc et le dispositif de freinage normal étant assurée par un dispositif à perte de mouvement permettant de conserver une commande classique du dispositif de freinage normal par action sur la pédale de frein ; le dispositif à perte de mouvement comprend un ressort de traction en hélice comportant un prolongement rectiligne formant tige de liaison, la manivelle étant munie d'un tourillon sur lequel est articulée une boucle de cette tige de liaison, l'autre extrémité du ressort étant constituée par une tige rectiligne recourbée suivant une boucle relativement longue propre à recevoir dans sa concavité une extrémité en saillie d'un arbre situé en partie basse d'une pédale de frein classique.

Dans le cas particulier d'un véhicule de golf, comprenant des moteurs électriques de propulsion alimentés en courant haché, le dispositif peut comprendre des moyens de commande, d'un relais de commande, sensibles à l'état conducteur ou bloqué d'un transistor d'alimentation des moteurs électriques de propulsion ; des moyens sont prévus permettant la commande manuelle du desserrage de frein de parc.

Avantageusement, le dispositif comporte une temporisation réglable pour l'actionnement du serrage du frein de parc après cessation d'action sur la pédale d'accélérateur.

L'invention consiste, mises à part les dispositions exposées ci-dessus, en un certain nombre d'autres dispositions dont il sera plus explicitement question ci-après à propos de modes de réalisation particuliers décrits avec référence aux dessins ci-annexés, mais qui ne sont nullement limitatifs.

La figure 1, de ces dessins, est un schéma électrique d'un dispositif de commande de frein de parc selon l'invention, avec un serrage manuel et un desserrage automatique.

La figure 2 est un schéma illustrant une variante de réalisation du dispositif de la figure 1, toujours avec serrage manuel et desserrage automatique.

La figure 3 est un autre schéma d'un dispositif de commande de frein de parc selon l'invention, avec serrage et desserrage manuels.

La figure 4 est un schéma d'une variante de réalisation du dispositif de commande de frein de parc avec serrage et desserrage automatiques.

La figure 5 est un schéma électrique plus détaillé du dispositif de commande de la figure 4.

La figure 6, enfin, est une vue en élévation d'une partie avant d'un véhicule de golf équipé d'un dispositif de commande de frein de parc selon l'invention.

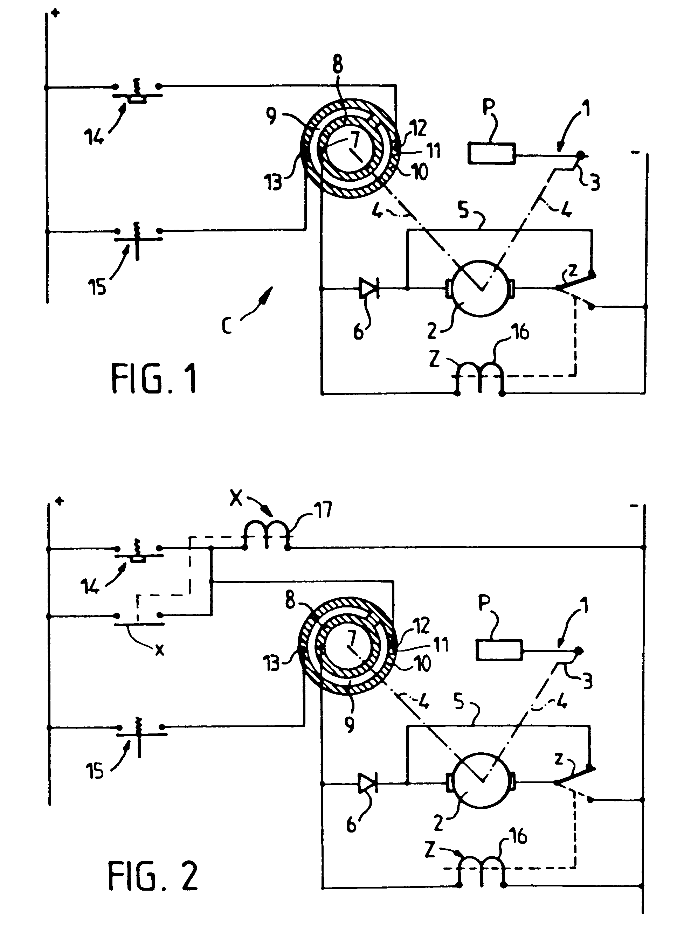

En se reportant à la figure 1 des dessins, on peut voir un dispositif de commande C d'un frein de parc pour véhicule automobile (non représenté). Seule a été schématiquement représentée une liaison mécanique 1 permettant d'agir sur le frein de parc P schématiquement représenté. Le dispositif de commande C comprend un moteur électrique 2 propre à mettre en action le frein de parc P. Pour cela, une manivelle 3 est calée sur l'arbre 4 du moteur 2 ou d'un réducteur (non montré) entraîné par le moteur 2. La manivelle 3 entraîne la tige 1 et peut passer de la position en trait plein représentée sur la figure 1 à une position diamétralement opposée. La position en trait plein peut correspondre au serrage du frein de parc, tandis que la position diamétralement opposée correspond au desserrage.

Le passage d'une position à l'autre de la manivelle 3 est assuré par une rotation d'un demi-tour de l'arbre 4 soit toujours dans le même sens, soit en sens opposé.

Le moteur électrique 2 est du type à courant continu. Une borne du moteur 2 est reliée à la ligne d'alimentation - par l'intermédiaire de la position travail d'un contact z d'un relais Z. Sur sa position repos, représentée en trait plein sur la figure 1, le contact z met en court-circuit le moteur sur lui-même grâce à une liaison 5 avec l'autre borne du moteur. Cette autre borne du moteur est reliée à la cathode d'une diode 6 dont l'anode est reliée à un contact 7 propre à être en liaison électrique permanente avec une piste intérieure annulaire 8 conductrice fermée sur elle-même. Cette piste 8 est prévue concentriquement sur un disque isolant 9 calé sur l'arbre 4. Ce disque 9 constitue une came qui commande l'arrêt du moteur 2 et de l'arbre 4 dans la position de serrage ou de desserrage.

Le disque 9 comporte une autre piste extérieure conductrice ouverte 10, concentrique à la piste 8 et reliée électriquement à cette dernière, les deux extrémités voisines de cette piste 10 étant séparées par un espace isolant 11, constituant un "trou" non conducteur. Deux contacts 12, 13 diamétralement opposés sont prévus pour venir en appui sur la zone annulaire de la piste 10.

Le contact 12, correspondant à la commande du serrage, est relié électriquement à une borne d'un bouton-poussoir 14 dont l'autre borne est reliée à la ligne d'alimentation électrique +.

Le contact 13, affecté au desserrage, est relié à une borne d'un contact 15 dont l'autre borne est reliée à la ligne +.

La fermeture du contact 15 est commandée par la pédale d'accélérateur (non représentée) du véhicule automobile. Lorsque le conducteur appuie sur cette pédale, il provoque la fermeture du contact 15.

L'enroulement de commande 16 du relais Z est branché entre le contact 7 et la ligne d'alimentation -.

Le fonctionnement du dispositif de commande de la figure 1 est le suivant.

On suppose que le dispositif de commande est dans la position "desserrage" du frein de parc, c'est-à-dire que la manivelle 3 occupe une position diamétralement opposée à celle de la figure 1, de même que l'espace isolant 11 qui se trouve sous le contact 13.

Lorsque le conducteur souhaite obtenir le serrage du frein de parc, il lui suffit d'appuyer sur le bouton-poussoir 14, pendant un temps minimum pour que l'arbre 4 accomplisse un demi-tour, c'est-à-dire environ 1/2 seconde. Le relais Z est mis sous tension puisque la liaison entre la ligne + et la ligne - est assurée par le contact 12, la piste 10 qui, en position de desserrage, se trouve sous le contact 12, la piste 8, le contact 7 et la liaison entre le bobinage 16 et ce contact 7. Le relais Z provoque le passage du contact z de la position de repos (trait plein) à la position travail (tirets), ce qui assure la mise sous tension du moteur 2 qui se met à tourner en entraînant simultanément la manivelle 3 et le disque 9.

Lorsque l'arbre 4 aura accompli 1/2 tour, la manivelle 3 aura déplacé la tige 1 en position de serrage (position de la figure 1). Simultanément, le disque 9 aura tourné par rapport aux contacts 7,12 et 13 et l'espace isolant 11 se trouvera sous le contact 12, alors que le contact 13 appuiera sur la piste 10. L'arrivée de l'espace isolant 11 sous le contact 12 coupe l'alimentation du moteur 2 qui s'arrête dans la position de serrage.

Du fait que le relais Z n'est plus excité, le contact z revient à la position de repos en trait plein, ce qui assure la mise en court-circuit du moteur 2 et son arrêt précis.

Lorsque le chauffeur appuie sur la pédale d'accélérateur, le contact 15 se ferme et assure l'alimentation de la bobine 16 du relais Z par l'intermédiaire du contact 13 qui, à ce moment, est en contact avec la piste 10. Le moteur 2 va accomplir à nouveau 1/2 tour, comme expliqué précédemment, en faisant passer la manivelle 3 de la position serrage à la position desserrage. Le déblocage du frein de parc se produit environ 1/2 seconde après appui sur la pédale d'accélérateur.

La figure 2 montre un dispositif de commande du même genre que celui de la figure 1. Toutefois, le bouton-poussoir de commande 14 est combiné avec un relais X destiné à assurer un maintien de l'alimentation dans le cas où le bouton-poussoir 14 est relâché avant que la manivelle 3 n'ait accompli 1/2 tour.

Le relais X comprend un bobinage 17 branché entre la ligne - d'alimentation et le contact 12. Ce relais X comprend un contact travail x branché en parallèle au bouton-poussoir 14 entre la ligne + et le contact 12.

Le fonctionnement est semblable à celui décrit à propos de la figure 1. Toutefois, une impulsion, même très rapide, sur le bouton-poussoir 14 est suffisante pour effectuer le blocage du frein de parc puisque cette impulsion provoque, par le relais X, la fermeture du contact travail x qui maintient l'alimentation du moteur 2 même si le poussoir 14 est relâché.

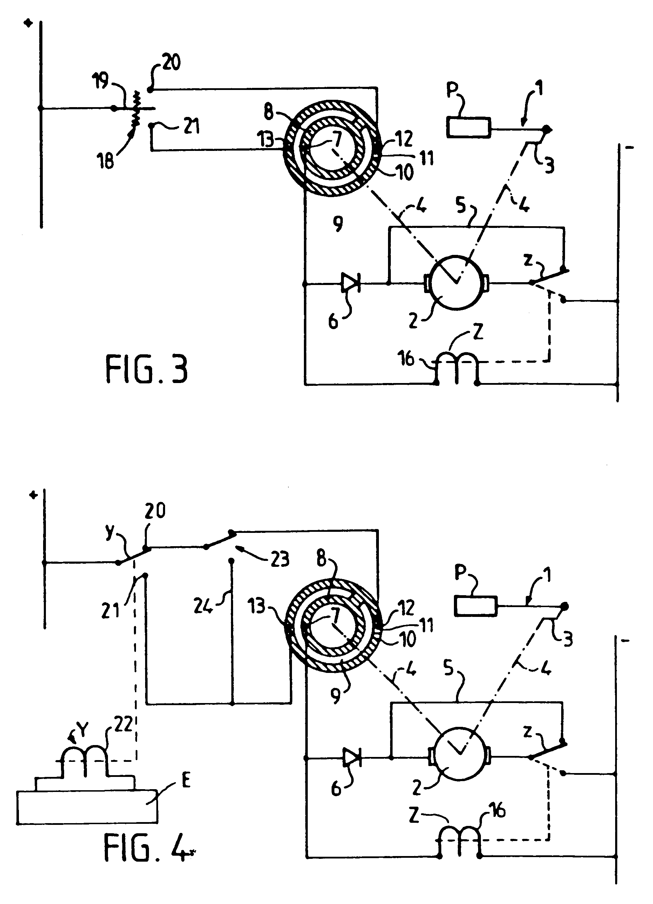

La figure 3 est un schéma du dispositif de commande semblable à celui des figures 1 et 2 dans lequel, toutefois, la commande du serrage et du desserrage est manuelle et est assurée à l'aide d'un commutateur 18, comprenant une barrette 19, reliée à la ligne +, qui peut être placée soit en position repos représentée en trait plein sur la figure 3, soit dans une position de travail où elle est en contact avec un plot 20 relié au contact 12 ou avec un plot 21 relié au contact 13.

De préférence, des moyens de rappel élastique sont prévus pour ramener la barrette 19 dans sa position médiane où elle n'est en contact avec aucun plot.

Le déplacement manuel de la barrette 19 pour la mettre en contact avec le plot 20, et le maintien de ce contact pendant 1/2 seconde environ, permet d'obtenir le blocage du frein de parc.

Le desserrage est obtenu en déplaçant manuellement la barrette 19 pour l'amener en contact avec le plot 21, et en la maintenant environ 1/2 seconde dans cette position.

Pour éviter d'avoir à maintenir la barrette 19 pendant un temps suffisant au serrage ou au desserrage, on peut prévoir pour chacun des plots 20, 21 des relais d'auto-maintien semblables au relais X de la figure 2.

Le schéma du dispositif de commande de la figure 4 est semblable, en grande partie, à celui de la figure 3. Toutefois, le commutateur manuel 18 a été remplacé par un relais Y, dont la bobine 22 est commandée par un circuit indépendant E. Une barrette mobile y de ce relais remplace la barrette 19 de la figure 3.

Un interrupteur de sécurité 23 est monté dans la ligne électrique reliant la borne 20 de la barrette y au contact 12. Cette interrupteur 23 peut prendre la position représentée en trait plein sur la figure 4 où il assure la liaison entre la borne de la barrette y et le contact 12. L'interrupteur 23 peut prendre une deuxième position où il relie la borne 20 de la barrette y à une ligne 24 reliée au contact 13, permettant de desserrer le frein de parc.

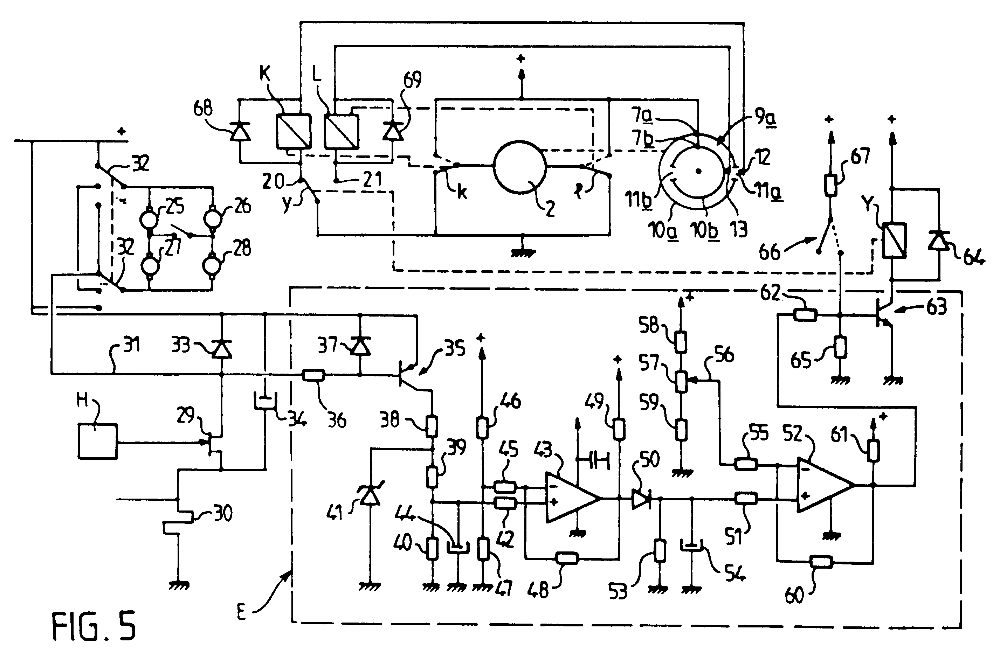

En se reportant à la figure 5, on peut voir le schéma électrique détaillé d'un dispositif de commande à serrage et desserrage automatique du type de celui décrit à propos de la figure 4.

Le schéma de la figure 5 est prévu pour un dispositif de commande de frein de parc sur un véhicule de golf à propulsion par moteur électrique. De préférence, quatre moteurs électriques 25, 26, 27, 28 sont associés à chacune des quatre roues du véhicule conformément à FR-A-2 631 902.

Le passage du courant, dans les moteurs 25-28 de propulsion, est contrôlé par un ensemble de transistors MOS 29, branchés en parallèle, dont un seul a été représenté.

Chaque transistor 29, par exemple du type à canal N, a sa source reliée à la masse, avec interposition éventuelle d'une résistance 30 (shunt), et son drain relié à une ligne électrique 31 destinée à être reliée à l'une des bornes des moteurs 25-28 par l'intermédiaire d'un commutateur 32.

L'autre borne de chacun des moteurs 25-28 est destinée à être reliée à la ligne + d'alimentation par l'intermédiaire d'un autre contact du même commutateur 32.

On comprend immédiatement, comme d'ailleurs expliqué dans FR-A-2 631 902, que lorsque le commutateur 32 est sur l'une de ses positions de travail assurant la liaison de la ligne + avec l'une des bornes des moteurs 25-28, ces moteurs seront alimentés lorsque les transistors 29 seront conducteurs, et ne seront pas alimentés lorsque les transistors 29 seront bloqués.

Des moyens H, par exemple du type de ceux décrits dans FR-A-2 631 902, sont prévus pour contrôler la tension de la grille des transistors 29 et rendre ces transistors conducteurs pendant des périodes de temps variables et réglables. Les moyens H assurent donc une alimentation électrique des moteurs de propulsion 25-28 par hachage du courant ; l'intensité moyenne traversant les moteurs de propulsion, et donc la puissance instantanée disponible, variera en fonction du taux de hachage (ou rapport cyclique). Le réglage de ce taux de hachage est assurée par l'action sur la pédale d'accélérateur ; plus la pédale d'accélérateur est enfoncée, plus la durée de conduction des transistors 29 est élevée, et inversement.

Des diodes de roue libre 33, dont une seule a été représentée, sont branchées en parallèle, avec leurs anodes reliées au drain des transistors 29 et donc à la borne correspondante des moteurs de propulsion 25-28 ; la cathode de ces diodes 33 est reliée à la ligne +. Un condensateur 34 est branché entre la cathode des diodes 33 et la source des transistors 29.

Les moyens décrits précédemment à propos de la figure 5 étaient déjà prévus dans FR-A-2 631 902.

Les moyens décrits ci-après sont spécifiques de l'invention et de la commande du frein de parc.

On a désigné par la référence 2, sur cette figure 5, le moteur électrique de commande du frein de parc comme pour les figures précédentes. On retrouve élgalement le relais Y, avec sa barrette y déjà décrit à propos de la figure 4.

La commande automatique du relais Y est réalisée à l'aide du circuit E décrit ci-après.

Le circuit E comprend, en entrée, un transistor 35, par exemple de type PNP dont l'émetteur est relié à la cathode de la diode 33. La base du transistor 35 est reliée, par l'intermédiaire d'une résistance 36, à l'anode de la diode 33. Une diode 37 est branchée entre la base et l'émetteur du transistor 35. L'anode de la diode 37 est reliée à la base du transistor 35, tandis que la cathode de la diode 37 est reliée à l'émetteur.

Le collecteur du transistor 35 est relié par plusieurs résistances en série 38, 39, 40 à la masse.

Une diode ZENER 41 est branchée entre la masse et un point situé entre les résistances 38 et 39. La diode ZENER 41 est prévue pour limiter la tension entre ce point et la masse à une valeur prédéterminée, par exemple de 17 V.

Un point situé entre les résistances 39 et 40 est relié, par l'intermédiaire d'une résistance 42 à l'entrée non inverseuse d'un amplificateur opérationnel 43 branché en comparateur ; un condensateur 44 est branché entre ce point milieu des résistances 39 , 40 et la masse.

L'entrée inverseuse de l'amplificateur 43 est reliée par une résistance 45 à un point milieu d'un diviseur de tension formé par deux résistances 46, 47 branchées en série entre une borne + sous une tension déterminée (par exemple 17 V) et la masse. Une valeur de tension de référence est ainsi envoyée sur l'entrée inverseuse de l'amplificateur 43. La sortie de cet amplificateur est reliée à l'entrée inverseuse par une résistance 48. La sortie de l'amplificateur 43 est également reliée par une résistance 49 à la borne + de la source de tension de référence (+ 17 V par exemple), et à l'anode d'une diode 50. La cathode de cette diode est reliée par une résistance 51 à une entrée non inverseuse d'un amplificateur opérationnel 52, également branché en comparateur.

Une résistance 53 et un condensateur 54 sont branchés en parallèle entre la cathode de la diode 50 et la masse. Ces deux éléments 53, 54 forment un circuit de temporisation

L'entrée inverseuse de l'amplificateur 52 est reliée, par une résistance 55, au curseur 56 d'un potentiomètre 57. Une borne de ce potentiomètre est reliée à la borne + de la tension de référence (+ 17 V) par une résistance 58. L'autre borne du potentiomètre est reliée à la masse par l'intermédiaire d'une résistance 59.

La sortie de l'amplificateur 52 est reliée à l'entrée inverseuse par une résistance 60. La sortie de l'amplificateur 52 est en outre reliée par une résistance 61 à la borne + de la source de tension de référence (+ 17 V par exemple).

La sortie de l'amplificateur 52 est enfin reliée, par l'intermédiaire d'une résistance 62, à la base d'un transistor 63, par exemple de type NPN. L'émetteur de ce transistor 63 est relié à la masse, tandis que le collecteur est relié à une borne de la bobine du relais Y, l'autre borne de cette bobine étant reliée à la borne + d'une source de tension continue, par exemple à + 24 V. Une diode 64 est montée en parallèle aux bornes de la bobine de Y, la cathode de cette diode étant reliée à la borne + et l'anode étant reliée au collecteur du transistor 63.

Une résistance 65 est branchée entre la base du transistor 63 et la masse.

Un commutateur 66 est prévu pour permettre le fonctionnement en automatique ou en manuel. La position du commutateur représentée en trait plein sur la figure 5 correspond au fonctionnement en automatique, la liaison entre la borne + 24 V et la base du transistor 63, par l'intermédiaire de la résistance 67 étant coupée.

Lorsque le commutateur 66 est basculé dans la position représentée en tirets, la liaison entre la base du transistor 63 et la borne +, par l'intermédiaire de la résistance 67, est établie. Le transistor 63 est alors rendu conducteur en permanence ce qui assure l'alimentation de la bobine Y et le basculement du contact y provoquant le desserrage du frein de parc.

La borne de pivotement du contact y est reliée à la masse. La borne 20 du relais Y sur laquelle est en appui le contact y au repos (position en trait plein de la figure 5) est reliée à une borne d'une bobine d'un relais électromagnétique K propre à commander le basculement d'un contact k entre une position de repos représentée en trait plein sur la figure 5 et une position travail, représentée en tirets. La borne de pivotement du contact k est reliée à une borne du moteur 2 ; la borne sur laquelle le contact k vient en appui au repos est reliée à la masse ; l'autre borne, sur laquelle le contact k vient en appui en position travail est reliée à la borne + de la source d'alimentation de puissance (+ 24 V par exemple).

Une diode 68 est branchée entre les bornes de la bobine du relais K, l'anode de cette diode étant reliée à la borne de la bobine connectée au contact y, la cathode étant reliée à l'autre borne, laquelle est elle-même reliée au contact 12 décrit précédemment, propre à coopérer avec une piste 10a conductrice prévue sur un disque 9a entraîné en rotation par le moteur 2. La piste extérieure 10a est ouverte et comporte entre ses deux extrémités un espace isolant 11a semblable à l'espace 11 des figures 1 à 4.

Une seconde piste conductrice 10b, concentrique à 10a, est prévue à l'intérieur de cette dernière. Cette seconde piste 10b est également ouverte et comporte, entre ses extrémités, un espace isolant 11b diamétralement opposé à l'espace 11a. Le contact 13, décrit précédemment, est en appui sur le disque 9a dans la zone annulaire de cette piste 10b. Le contact 7 des figures 1 à 4 est remplacé par un contact double 7a, 7b propre à appuyer simultanément sur la piste 10a et la piste 10b ; ce contact double 7a, 7b est décalé, par exemple de 90°, par rapport aux contacts 12 et 13 qui ont la même position angulaire.

Le contact 13 est relié à une borne d'une bobine d'un relais électromagnétique L ; l'autre borne de cette bobine est reliée à la borne 21 sur laquelle le contact y vient en appui en position travail. Une diode 69 est montée entre les bornes de la bobine du relais L, d'une manière semblable à la diode 68 pour la bobine de K. Un contact l, pouvant basculer entre une position repos (représentée en trait plein) et une position travail (représentée en tirets) est commandé par la bobine de L. La borne de pivotement de ce contact l est reliée à la borne du moteur 2 opposée à celle reliée au contact k. La borne sur laquelle le contact l s'appuie au repos est reliée à la masse ; l'autre borne sur laquelle le contact l s'appuie en position de travail est reliée à la borne + (+ 24 V par exemple). On voit ainsi que les contacts k et l mettent le moteur en court-circuit sur lui-même dans la position repos, ce qui permet un arrêt précis.

Les contacts 7a, 7b sont reliés à la borne travail des contacts k et l ainsi qu'à la borne + de la source d'alimentation (+ 24 V).

Le fonctionnement du dispositif de commande de la figure 5 est le suivant.

Lorsque le conducteur n'appuie pas sur la pédale d'accélérateur, en particulier lorsque le véhicule est à l'arrêt, le transistor 29 est bloqué et la tension sur le drain de ce transistor ainsi que sur l'anode de la diode 33 est égale à celle de la borne + de la source d'alimentation, la liaison électrique entre le drain et la ligne + étant assurée par les enroulements des moteurs 25-28. Le transistor 35 est bloqué et ne laisse pas passer le courant.

Il en résulte que le potentiel du point compris entre les résistances 39 et 40 a une valeur faible, voisine de 0. La tension de sortie de l'amplificateur 43, de même que la tension de sortie de l'amplificateur 52 sont au niveau bas. Il en résulte que le transistor 63 n'est pas conducteur (état bloqué) de sorte que la bobine du relais Y n'est pas alimentée et le contact y est en position repos.

L'arbre du moteur 2 et la came 9a restent dans la position représentée sur la figure 5 correspodant au serrage du frein de parc, position pour laquelle le contact 12 se trouve en appui sur l'espace isolant 11a. Les bobines des relais K et L ne sont pas alimentées et les contacts k et l restent dans la position repos.

Lorsque la pédale d'accélérateur est enfoncée, le transistor 29 devient conducteur, selon un taux de hachage dépendant de la position de la pédale d'accélérateur. Les moteurs de propulsion 25-28 sont alimentés en courant électrique et tournent. La ligne 31 va se trouver à une tension inférieure à celle de la borne + de la source d'alimentation. Il en est de même pour la base du transistor 35 qui est polarisé dans le sens passant et devient conducteur. Un courant va circuler dans la série de résistance 38,39 et 40.

La tension du point milieu compris entre les résistances 39 et 40 va augmenter. Lorsque cette tension est suffisante l'amplificateur-comparateur 43 bascule et sa sortie passe à l'état haut. La capacité 54 va se charger rapidement, à travers la diode passante 50.

Lorsque la tension aux bornes de la capacité 54 atteint une valeur suffisante, l'amplificateur-comparateur 52 bascule à son tour et sa sortie passe à l'état haut, ce qui rend conducteur le transistor 63 et assure l'alimentation de la bobine du relais Y, donc son excitation.

Il en résulte que le contact y passe de la position repos à la position travail (en tirets sur la figure 5). La bobine du relais L est alors alimentée par l'intermédiaire du contact 13 de la piste 10b, du contact 7b et de la liaison entre ce contact et la borne +. Le contact l va passer sur sa position travail assurant l'alimentation du moteur 2 qui va tourner en entraînant le disque 9a jusqu'à ce que l'espace isolant 11b arrive sous le contact 13, c'est-à-dire jusqu'à ce que le disque 9a ait effectué un demi-tour.

Le desserrage du frein de parc est alors réalisé, et, du fait que l'alimentation du moteur 2 cesse, le disque 9a s'arrête dans la position diamétralement opposée à celle représentée sur la figure 5.

La bobine du relais L n'est plus excitée et le contact l revient en position repos (trait plein).

Lorsque de nouveau la pédale d'accélérateur est relâchée et que le transistor 29 se bloque, la tension sur le point compris entre la résistance 39 et 40 disparaît. La sortie du comparateur 43 passe de nouveau à l'état bas (0 V). La capacité 54 se décharge à travers la résistance 53, entraînant la temporisation du serrage du frein à main.

Lorsque la tension aux bornes de la capacité 54 devient inférieure à une valeur de comparaison, réglable par le potentiomètre 57, la sortie du comparateur 52 bascule et passe à l'état bas commandant le blocage du transistor 63. La bobine du relais Y n'est plus alimentée et le contact y passe en position repos (trait plein).

Du fait qu'à ce moment le disque 9a occupe une position diamétralement opposée par rapport à celle représentée sur la figure 5, le contact 12 est en appui sur la piste 10a ce qui assure la mise sous tension de la bobine du relais K. Le contact k bascule en position travail ce qui assure l'alimentation du moteur 2 qui tourne en entraînant le disque 9a.

Le mouvement de rotation se poursuit jusqu'à ce disque 9a ait effectué un demi-tour, pour retrouver la position de la figure 5, où l'espace isolant 11a se trouve sous le contact 12.

L'alimentation du moteur 2 cesse et le moteur s'arrête, le contact k revenant en position repos. Le frein de parc est serré.

A aucun moment, un court-circuit de l'alimentation n'est possible, même si les relais K et L restaient collés.

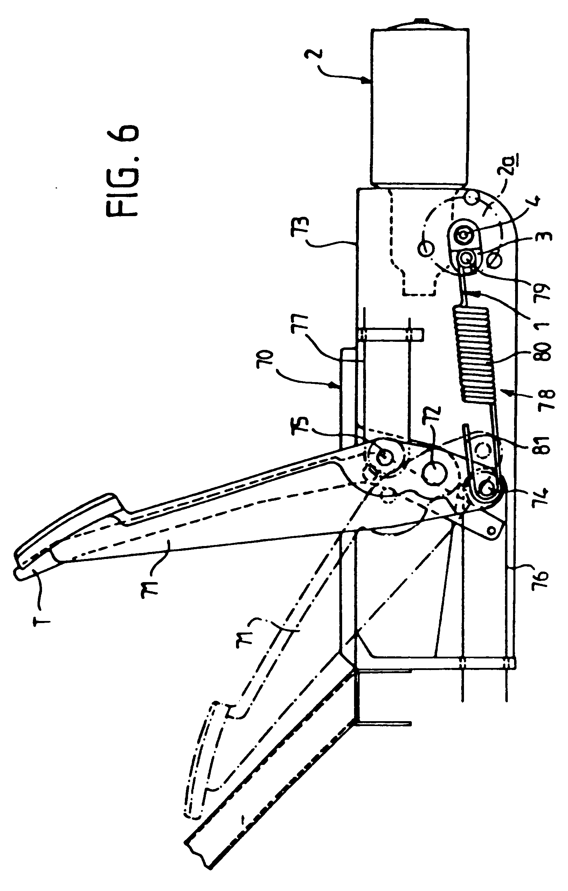

En se reportant à la figure 6, on peut voir une réalisation d'un dispositif de commande de frein de parc, selon l'invention, sur un véhicule de golf. Seule une partie 70 du châssis du véhicule est représentée, cette partie étant située juste en avant du siège (non représenté) du conducteur.

Une pédale de frein classique 71 est articulée autour d'un axe transversal horizontal 72 porté en partie basse du châssis 70, au-dessous du plancher 73 du véhicule. La partie basse de la pédale, située au-dessous de ce plancher 73 est munie, de part et d'autre de l'axe 72, d'arbres parallèles 74, 75 propres à servir de tourillons pour des poulies sur lesquelles s'enroulent, respectivement, des câbles de traction 76, 77 propres à actionner respectivement les freins (non représentés) prévus sur les roues avant et arrière. Une rotation de la pédale 71 dans le sens contraire d'horloge autour de l'axe 72, pour passer de la position relevée (en trait plein sur la figure 6) à la position enfoncée, amorcée en trait mixte sur cette figure 6, provoque une traction simultanée sur les câbles 76 et 77, et donc le serrage des freins avant et arrière.

Le dispositif de commande du frein de parc est implanté sous le plancher 73, légèrement en arrière de l'axe 72. Le moteur électrique 2, évoqué précédemment, est fixé sur le châssis 70. Le moteur 2 est combiné, généralement, avec un réducteur 2a, de sorte que l'arbre du moteur 2 est orienté parallèlement à la direction longitudinale du châssis 70, tandis que l'arbre 4 de réducteur, orthogonal à celui du moteur, est orienté transversalement.

La manivelle 3 de manoeuvre du frein de parc est calée angulairement en bout de l'arbre 4 du réducteur.

Les moyens de freinage du frein de parc sont confondus avec le dispositif de freinage normal et la manivelle 3 est propre à exercer une traction sur les câbles 76 et 77, par l'intermédiaire de la partie basse de la pédale 71.

Une liaison mécanique, par un dispositif à perte de mouvement 78, est prévue entre la manivelle 3 et une partie de l'arbre 74 en saillie par rapport à la pédale 71. La manivelle 3 est munie d'un tourillon 79 excentré par rapport à l'arbre 4. Le dispositif 78 comprend un ressort de traction en hélice 80 dont une extrémité comporte un prolongement rectiligne qui constitue la tige de liaison 1. L'extrémité de cette tige 1 forme une boucle articulée sur le tourillon 79.

L'autre extrémité du ressort 80 est constituée par une tige rectiligne recourbée suivant une boucle 81 relativement longue. Cette boucle 81 est propre à recevoir, dans sa concavité, une extrémité en saillie de l'arbre 74. Les branches de la boucle 81 sont suffisamment longues pour que l'arbre 74 reste à l'intérieur de cette boucle alors que la pédale 71 est totalement enfoncée et que la manivelle 3 occupe la position en trait plein de la figure 6, correspondant au desserrage du frein de parc. Lorsque le serrage du frein de parc est commandé, la manivelle 3 accomplit un demi-tour et le tourillon 79 vient prendre une position diamétralement opposée à celle représentée sur la figure 6, par rapport à l'arbre 4.

Un réglage optimum de la longueur du ressort 80 permet une définition de la butée haute de la pédale 71.

Le ressort 80 permet, en outre, d'amortir la pédale 71 lors son relâchement.

Les caractéristiques de ce ressort 80 permettent d'assurer un certain effort de freinage et compensent les courses (garde plus ou moins importante de la commande).

Le disque 9 à piste conductrice des figures 1 à 4 est calé sur l'arbre 4 de la manivelle. Le ressort 81 transmet l'effort de traction de la manivelle 3, en amortissant les secousses, à l'arbre 74 qui recule vers la position en trait mixte, la pédale 71 étant entraînée dans un mouvement de rotation en sens inverse d'horloge autour de l'axe 72. Le tourillon 75 est déplacé vers l'avant et le dispositif de freinage est actionné.

La pédale d'accélérateur T a été représentée dans sa position de repos sur la figure 6.

Le conducteur conserve l'usage classique du dispositif de freinage normal par action sur la pédale 71, tandis que le dispositif automatique de commande du frein de parc intervient dès que le véhicule est arrêté et la pédale d'accélérateur relâchée.

On peut prévoir des moyens sensibles à la vitesse de déplacement du véhicule et propres à n'autoriser le serrage automatique du frein de parc que lorsque le véhicule est arrêté depuis un certain temps, par exemple une seconde ou que sa vitesse est inférieure à une valeur prédéterminée. De tels moyens pourraient, par exemple, être sensibles à la tension aux bornes des moteurs de propulsion 25-28 ; lorsque le véhicule continue à avancer en roue libre, la présence d'une tension, due à la rotation des moteurs 25-28, fonctionnant en générateurs, permettrait d'empêcher le serrage du frein de parc, jusqu'à arrêt complet du véhicule, pédale d'accélérateur relevée.

On pourrait également prévoir un capteur de siège, branché en parallèle au précédent, sensible au poids du conducteur. Le serrage du frein de parc ne serait commandé que lorsque le conducteur n'est plus assis sur le siège.

Un frein de parc manuel peut être prévu en parallèle avec le dispositif de commande de l'invention.

Il est à noter que l'invention concerne un dispositif de commande de frein de parc qui peut s'appliquer à tout véhicule automobile, bien qu'une voiture de golf ait été plus spécialement considérée dans la description qui précède.

Les moyens moteurs actionnant le frein de parc pourraient être constitués par un vérin pneumatique, un vérin hydraulique ou tout autre moyen équivalent au moteur électrique 2.

Il est clair que la réalisation de la figure 6, qui concerne un dispositif de freinage par câble, n'est pas limitative. Dans le cas d'un freinage hydraulique, la pédale 71 de la figure 6, et donc la manivelle 3, aurait une action sur le maître-cylindre.

## Revendications

1. Dispositif de commande de frein pour un véhicule automobile, ce dispositif comprenant des moyens moteurs propres à actionner le frein, lesdits moyens moteurs étant constitués par un moteur électrique (2), et des moyens de commande (14, 15 ; 19 ; Y, E) pour la mise en marche, en particulier automatique, desdits moyens moteurs, lesdits moyens de commande comprenant une manivelle rotative (3) propre à entraîner une liaison mécanique (1) qui agit sur le frein, caractérisé par le fait que la liaison mécanique (1) agit sur un frein de parc (P), le moteur électrique (2) étant propre à assurer la rotation de la manivelle (3) d'une position "serrage" à une position "desserrage" dudit frein et inversement, et que le dispositif comprend un disque (9, 9a) muni de deux pistes concentriques (8, 10 ; 8a, 10a) dont l'une au moins (10, 10a) est ouverte et comporte un espace isolant (11 ; 11a) séparant ses deux extrémités, ce disque étant calé sur l'arbre d'entraînement (4) de la manivelle (3) et étant propre à coopérer avec des frotteurs (7, 12, 13; 7a, 7b, 12, 13) venant en contact avec ces pistes pour assurer l'alimentation électrique du moteur de manière à provoquer l'arrêt de l'arbre (4) et de la manivelle (3) dans une position déterminée et n'autoriser le mouvement de cette manivelle (3) que pour passer de la position de serrage à celle de desserrage ou inversement.

2. Dispositif selon la revendication 1, caractérisé par le fait que les positions de serrage et de desserrage de la manivelle (3) sont diamétralement opposées.

3. Dispositif selon l'une des revendications 1 ou 2, caractérisé par le fait que la manivelle (3) est calée sur l'arbre (4) du moteur (2) ou d'un réducteur (2a) entrainé par le moteur.

4. Dispositif selon la revendication 1, caractérisé par le fait que le disque (9) comporte une piste intérieure annulaire (8) conductrice fermée sur elle-même, une autre piste extérieure ouverte (10) concentrique à la piste (8), les deux pistes (8, 10) étant reliées électriquement entre elles, les deux extrémités voisines de la piste extérieure (10) étant séparées par un espace annulaire (11), deux contacts (12, 13) diamétralement opposés étant prévus pour venir en appui sur la zone annulaire de la piste (10), l'un des contacts (12) correspondant à la commande du serrage, l'autre contact (13) étant affecté au desserrage.

5. Dispositif selon la revendication 1, caractérisé par le fait que le disque (9a) comporte une piste conductrice extérieure (10a) ouverte et une seconde piste conductrice (10b) concentrique et prévue à l'intérieur de la piste extérieure (10a), cette seconde piste (10b) étant également ouverte et comprenant entre ses extrémités un espace annulaire (11b) diamétralement opposé à l'espace (11a) de la piste extérieure (10a), les contacts (12, 13) propres à appuyer sur les pistes (10a, 10b) ayant la même position angulaire et un contact double (7a, 7b) étant propre à appuyer simultanément sur la piste extérieure (10a) et la piste intérieure (10b).

6. Dispositif selon l'une des revendications 1 à 5, caractérisé par le fait que la commande du serrage et/ou du desserrage du frein de parc est manuelle, en particulier à l'aide de boutons-poussoirs ou de contacts (14, 18) propres à mettre en marche les moyens moteurs (2) d'actionnement du frein de parc dans le sens du serrage ou du desserrage.

7. Dispositif selon la revendication 6, caractérisé par le fait qu'il comporte une commande automatique (15) du desserrage prévue lors d'une action sur la pédale d'accélérateur.

8. Dispositif selon l'une des revendications 1 à 7, en particulier pour un véhicule de golf, caractérisé par le fait que les moyens moteurs (2, 2a) du frein de parc sont propres à agir sur un dispositif de freinage normal, la liaison mécanique (1) entre les moyens moteurs du frein de parc et le dispositif de freinage normal étant assurée par un dispositif à perte de mouvement (78) permettant de conserver une commande classique du dispositif de freinage normal par action sur la pédale de frein.

9. Dispositif selon la revendication 8, caractérisé par le fait que le dispositif à perte de mouvement (78) comprend un ressort de traction en hélice (80) comportant un prolongement rectiligne formant tige de liaison (1), la manivelle (3) étant munie d'un tourillon (79) sur lequel est articulée une boucle de cette tige de liaison (1), l'autre extrémité du ressort (80) étant constituée par une tige rectiligne recourbée suivant une boucle (81) relativement longue propre à recevoir dans sa concavité une extrémité en saillie d'un arbre (74) situé en partie basse d'une pédale de frein classique (71).

10. Dispositif selon l'une des revendications 1 à 9, en particulier pour un véhicule de golf, comprenant des moteurs électriques (25-28) de propulsion alimentés en courant haché, caractérisé par le fait qu'il comprend des moyens de commande (E), d'un relais (Y) de commande, sensibles à l'état conducteur ou bloqué d'un transistor d'alimentation (29) des moteurs électriques de propulsion (25-28).

11. Dispositif selon la revendication 10, caractérisé par le fait qu'il comporte des moyens (66) permettant la commande manuelle du desserrage de frein de parc.

12. Dispositif selon l'une des revendications 1 à 11, caractérisé par le fait qu'il comporte une temporisation (53, 54) réglable pour l'actionnement du serrage du frein de parc après cessation d'action sur la pédale d'accélérateur.

## Claims

1. Control device for a motor vehicle brake, the device comprising motor means adapted to actuate the brake; said motor means including an electric motor (2), and control means (14, 15, 19, Y, E) for the start-up, in particular automatic, of said motor means, said control means comprising a rotary crank (3) adapted to drive a mechanical linkage (1) for actuating the brake, characterized in that the mechanical linkage (1) actuates a parking brake (P), the electric motor (2) being adapted to insure the rotation of the crank (3) from an "engagement" position to a "disengagement" position of said breaker and conversely, and that the device comprises a disk (9, 9a) having two concentric tracks (8, 10, 8a, 10a) at least one of these tracks (10, 10a) is open and includes an insulated space (11, 11a) separating its two ends, this disk being fixed to drive shaft (4) of the crank (3) and being adapted to cooperate with brushes (7, 12, 13, 7a, 7b) coming into contact with these tracks to provide the power supply to the motor in order to cause the shaft (4) and the crank (3) to be stopped in a determined position and to enable the movement of this crank (3) only for passing from the engagement position to the disengagement position and conversely.

2. Device according to claim 1, characterized in that engagement and disengagement positions of the crank (3) are diametrically opposed.

3. Device according to one of claims 1 or 2, characterized in that the crank (3) is fixed on the shaft (4) of the motor (2) or of a reducing gear (2a) driven by the motor.

4. Device according to claim 1, characterized in that the disk (9) includes an inner annular, conductive, closed track (8), another outer, open track (10), concentric with track (8), the two tracks (8, 10) being electrically connected, the two adjacent ends of the outer track (10) being separated by an annular space (11), two diametrically opposite contacts being provided to engage the annular zone of the track (10), one of the contacts (12) corresponding to the engagement control, the other contact (13) being assigned to the disengagement.

5. Device according to claim 1, characterized in that disk (9a) includes an outer, conductive, open track (10a) and a second concentric, conductive track (10b) and provided inside the outer track (10a), this second track (10b) being also open and comprising between its ends an annular space (11b) diametrically opposite to the space (11a) of the outer track (10a), the contacts (12, 13) adapted to bear on tracks (10a, 10b) having the same angular position and a double contact (7a, 7b) being provided to engage simultaneously the outer track (10a) and the inner track (10b).

6. Device according to one of claims 1 to 5, characterized in that the control of engagement and/or disengagement of the parking brake is manual, in particular by means of push buttons or contacts (14, 18) adapted to starting the motor means (2) for actuating the parking brake in the engagement or the disengagement way.

7. Device according to claim 6, characterized in that it includes an automatic command (15) for disengagement when the accelerator pedal is actuated.

8. Device according to any one of claims 1 to 7, especially for a golf cart, characterized in that motor means (2, 2a) of the parking brake are adapted to actuate a normal braking device, the mechanical linkage (1) between the motor means of the parking brake and the normal braking device being ensured by a lost motion member (78) enabling to keep a normal control of the normal braking device by actuation of the brake pedal.

9. Device according to claim 8, characterized in that the lost motion member (78) includes a helical tension spring (80) having a straight extension forming a connecting rod (1), the crank (3) having a trunnion (79) on which is pivoted a loop portion of the connecting rod (1), the other end of the spring (80) having a straight rod bent to form a relatively long loop (81) adapted to receive in its concavity a projecting end of a shaft (74) located in the inferior portion of a conventional brake pedal (71).

10. Device according to any one of claims 1 to 9, especially for a golf cart, comprising electric drive motors (25, 28) supplied with a chopped current, characterized in that it comprises control means (E), a control relay (Y), responsive to the conductive or blocked state of a transistor (29) for energizing electric drive motors (25, 28).

11. Device according to claim 10, characterized in that it includes means (66) permitting the manual actuation of the disengagement of the parking brake.

12. Device according to any one of claims 1 to 11, characterized in that it includes a time delay circuit (53, 54) adjustable for actuating the engagement of the parking brake after the action on the accelerator pedal has stopped.

## Patentansprüche

1. Vorrichtung zur Steuerung der Bremse eines Kraftfahrzeugs, wobei diese Vorrichtung Antriebsmittel, die geeignet sind, die Bremse zu betätigen, und aus einem Elektromotor (2) bestehen, und Steuermittel (14, 15; 19; Y, E) für die insbesondere automatische Inbetriebnahme dieser Antriebsmittel umfaßt, wobei diese Steuermittel eine drehbare Kurbel (3) umfassen, die geeignet ist, eine mechanische Verbindung (1) anzutreiben, die auf die Bremse einwirkt, dadurch gekennzeichnet, daß die mechanische Verbindung (1) auf eine Standbremse (P) einwirkt, wobei der Elektromotor (2) geeignet ist, die Drehung der Kurbel (3) aus einer Stellung "Anzug" in eine Stellung "Lösung" dieser Bremse und umgekehrt zu gewährleisten, und daß die Vorrichtung eine Scheibe (9, 9a) aufweist, die mit zwei konzentrischen Bahnen (8, 10; 8a, 10a) versehen ist, von denen mindestens eine (10, 10a) offen ist und einen isolierenden Raum (11; 11a) besitzt, der ihre beiden Enden trennt, wobei diese Scheibe auf der Antriebswelle (4) der Kurbel (3) befestigt ist und geeignet ist, mit Schleifstücken (7, 12, 13; 7a, 7b, 12, 13) zusammenzuwirken, die mit diesen Bahnen in Kontakt kommen, um die elektrische Speisung des Motors so zu gewährleisten, daß der Stillstand der Welle (4) und der Kurbel (3) in einer bestimmten Stellung bewirkt wird und die Bewegung dieser Kurbel (3) nur zugelassen wird, um von der Anzugsstellung in die Lösungsstellung oder umgekehrt überzugehen.

2. Vorrichtung nach Anspruch 1, dadurch gekennzeichnet, daß die Stellungen Anzug und Lösung der Kurbel (3) diametral entgegengesetzt sind.

3. Vorrichtung nach einem der Ansprüche 1 oder 2, dadurch gekennzeichnet, daß die Kurbel (3) auf der Welle (4) des Motors (2) oder eines von dem Motor angetriebenen Untersetzungsgetriebes (2a) befestigt ist.

4. Vorrichtung nach Anspruch 1, dadurch gekennzeichnet, daß die Scheibe (9) eine innere ringförmige leitende Bahn (8), die in sich geschlossen ist, und eine andere äußere offene Bahn (10), die zur Bahn (8) konzentrisch ist, besitzt, wobei die beiden Bahnen (8, 10) elektrisch miteinander verbunden sind, die beiden benachbarten Enden der äußeren Bahn (10) durch einen ringförmigen Raum (11) getrennt sind, zwei diametral entgegengesetzte Kontakte (12, 13) vorgesehen sind, um auf der ringförmigen Zone der Bahn (10) in Auflage zu kommen, wobei einer (12) der Kontakte der Steuerung des Anzugs entspricht, und der andere Kontakt (13) der Lösung zugeteilt ist.

5. Vorrichtung nach Anspruch 1, dadurch gekennzeichnet, daß die Scheibe (9a) eine äußere offene leitende Bahn (10a) und eine zweite konzentrische leitende Bahn (10b) besitzt, die im Inneren der äußeren Bahn (10a) vorgesehen ist, wobei diese zweite Bahn (10b) ebenfalls offen ist und zwischen ihren Enden einen ringförmigen Raum (11b) besitzt, der dem Raum (11a) der äußeren Bahn (10a) diametral entgegengesetzt ist, wobei die Kontakte (12, 13), die geeignet sind, auf den Bahnen (10a, 10b) aufzuliegen, dieselbe Winkelstellung haben, und ein doppelter Kontakt (7a, 7b) geeignet ist, gleichzeitig auf der äußeren Bahn (10a) und der inneren Bahn (10b) aufzuliegen.

6. Vorrichtung nach einem der Ansprüche 1 bis 5, dadurch gekennzeichnet, daß die Steuerung des Anzugs und/oder der Lösung der Standbremse manuell ist, und zwar insbesondere mit Hilfe von Druckknöpfen oder Kontakten (14, 18), die geeignet sind, die Antriebsmittel (2) zur Betätigung der Standbremse in der Richtung des Anzugs oder der Lösung in Gang zu setzen.

7. Vorrichtung nach Anspruch 6, dadurch gekennzeichnet, daß sie eine automatische Steuerung (15) der Lösung besitzt, die bei einer Einwirkung auf das Gaspedal vorgesehen ist.

8. Vorrichtung nach einem der Ansprüche 1 bis 7 insbesondere für ein Golffahrzeug, dadurch gekennzeichnet, daß die Antriebsmittel (2, 2a) der Standbremse geeignet sind, auf eine normale Bremsvorrichtung einzuwirken, wobei die mechanische Verbindung (1) zwischen den Antriebsmitteln der Standbremse und der normalen Bremsvorrichtung durch eine Bewegungsverlustvorrichtung (78) gewährleistet ist, die die Beibehaltung einer herkömmlichen Steuerung der normalen Bremsvorrichtung durch Einwirkung auf das Bremspedal gestattet.

9. Vorrichtung nach Anspruch 8, dadurch gekennzeichnet, daß die Bewegungsverlustvorrichtung (78) eine schraubenförmige Zugfeder (80) besitzt, die eine eine Verbindungsstange (1) bildende geradlinige Verlängerung besitzt, wobei die Kurbel (3) mit einem Drehzapfen (79) versehen ist, auf dem eine Schleife dieser Verbindungsstange (1) angelenkt ist, wobei das andere Ende der Feder (80) aus einer geradlinigen Stange besteht, die zu einer relativ langen Schleife (81) gekrümmt ist, welche geeignet ist, in ihrer Konkavität ein vorstehendes Ende einer Welle (74) aufzunehmen, die im unteren Teil eines gebräuchlichen Bremspedals (71) gelegen ist.

10. Vorrichtung nach einem der Ansprüche 1 bis 9 insbesondere für ein Golffahrzeug, umfassend Antriebselektromotoren (25-28), die mit zerhacktem Gleichstrom gespeist sind, dadurch gekennzeichnet, daß sie Mittel (E) zur Steuerung eines Steuerrelais (Y) besitzt, die für den leitenden oder gesperrten Zustand eines Transistors (29) zur Speisung der elektrischen Antriebsmotoren (25-28) empfindlich sind.

11. Vorrichtung nach Anspruch 10, dadurch gekennzeichnet, daß sie Mittel (66) besitzt, die die manuelle Steuerung der Lösung der Standbremse gestatten.

12. Vorrichtung nach einem der Ansprüche 1 bis 11, dadurch gekennzeichnet, daß sie eine verstellbare Verzögerung (53, 54) für die Betätigung des Anzugs der Standbremse nach Aufhören der Einwirkung auf das Gaspedal besitzt.
